# EUROPEAN PATENT APPLICATION

(11) **EP 4 790 460 A1**
(43) Date of publication of application: **12.08.2026**
(21) Application number: 26152264.3
(22) Date of filing: 16.01.2026
(51) Int. Cl.: G01S 19/21

(54) **SYSTEM AND METHODS FOR ROBUST GNSS SPOOFING DETECTION**

(30) Priority: 10.02.2025 US 202563756665 P; 31.10.2025 US 202519375704
(71) Applicant: Honeywell International Inc., Charlotte, NC 28202 (US)
(72) Inventor: KEJIK, Petr, Charlotte, 28202 (US); KUCERA, Matej, Charlotte, 28202 (US); REZNICEK, Radek, Charlotte, 28202 (US); BARANEK, Radek, Charlotte, 28202 (US); SOPATA, Milan, Charlotte, 28202 (US)
(74) Representative: Haseltine Lake Kempner LLP

(57) **Abstract**

Systems and methods for robust GNSS spoofing detection are described herein. In certain embodiments, a system includes multiple global navigation satellite system (GNSS) receivers. A system also includes circuitry configured to receive GNSS data from the multiple GNSS receivers, wherein the circuitry is configured to perform multiple spoofing sub-monitor processes for at least two GNSS receivers in the multiple GNSS receivers using information received from the multiple GNSS receivers. The circuitry is further configured to determine whether a GNSS receiver in the multiple GNSS receivers is receiving a spoofed GNSS signal based on a combination of outputs from the multiple spoofing sub-monitor processes.

## Description

### CROSS-REFERENCE TO RELATED APPLICATIONS

This application claims the benefit of United States Provisional Patent Application Serial No. 63/756,665 entitled "SYSTEM AND METHODS FOR ROBUST GNSS SPOOFING DETECTION," filed on February 10, 2025, which is incorporated herein by reference in its entirety.

### BACKGROUND

Global Navigation Satellite System (GNSS) technology is widely used for determining navigation information. A GNSS receiver collects signals from multiple satellites and uses the data embedded in these signals to calculate the position of the receiver. During standard operation, these receivers continuously process satellite signals to provide accurate location information.

However, one significant vulnerability of GNSS signals is their susceptibility to spoofing. Spoofing occurs when a non-GNSS satellite/transmitter transmits a signal that mimics genuine GNSS signals. This unauthorized signal can be acquired and tracked alongside, or in place of, legitimate GNSS signals. As a result, a GNSS receiver may mistakenly interpret the spoofed signals, leading to incorrect position calculations and potentially significant navigation errors.

### SUMMARY

Systems and methods for robust GNSS spoofing detection are described herein. In certain embodiments, a system includes multiple global navigation satellite system (GNSS) receivers. A system also includes circuitry configured to receive GNSS data from the multiple GNSS receivers, wherein the circuitry is configured to perform multiple spoofing sub-monitor processes for at least two GNSS receivers in the multiple GNSS receivers using information received from the multiple GNSS receivers. The circuitry is further configured to determine whether a GNSS receiver in the multiple GNSS receivers is receiving a spoofed GNSS signal based on a combination of outputs from the multiple spoofing sub-monitor processes.

### DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:
FIG. 1 is a block diagram of a system receiving spoofed signals according to an aspect of the present disclosure;
FIG. 2 is a block diagram of a system for robustly detecting GNSS spoofing according to an aspect of the present disclosure;
FIGs. 3 and 3A are block diagrams illustrating a system for detecting GNSS spoofing from inputs from multiple sub-monitors according to an aspect of the present disclosure;
FIG. 4 is a block diagram illustrating a system for detecting GNSS spoofing from inputs from multiple sub-monitors according to an aspect of the present disclosure;
FIGs. 5 and 5A are block diagrams illustrating a system for detecting GNSS spoofing from inputs from multiple sub-monitors according to an aspect of the present disclosure; and
FIG. 6 is a flowchart diagram illustrating the detection of spoofing at different operational stages for a vehicle according to an aspect of the present disclosure; and
FIG. 7 is a flowchart diagram illustrating a method 700 for providing a spoofing determination by combining multiple spoofing determinations from multiple spoofing sub-monitor processes.

Per common practice, the drawings do not show the various described features according to scale, but the drawings show the features to emphasize the relevance of the features to the example embodiments.

### DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Systems and methods for robust GNSS spoofing detection are described herein. In particular, systems and methods described herein can provide for effective detection of GNSS (Global Navigation Satellite System) spoofing attacks across various types of spoofing attacks. This robust detection capability is achieved by integrating and analyzing data from multiple GNSS receivers in conjunction with several dedicated spoofing sub-monitors. Furthermore, the method can incorporate data from additional sensors to enhance accuracy. Notably, these systems and methods are capable of providing reliable spoofing detection using standard output data from GNSS receivers, without the need for complex phase measurements. In certain embodiments, spoofing sub-monitors provide separate spoofing determinations to a processing platform that receives the separate determinations. The processing platform then provides a final spoofing determination based on the separate determinations.

While GNSS technology is widely relied on for determining navigation information, GNSS is subject to vulnerabilities like interference and spoofing. Concerning spoofing, non-GNSS signal sources may be transmitted that mimic genuine GNSS signals. When a GNSS receiver receives these unauthorized signals, the GNSS receiver may use the spoofed signals along with received legitimate GNSS signals. As a result, the GNSS receiver may incorrectly interpret the information from the mixture of legitimate and spoofed signals, leading to incorrect position calculations and potentially significant navigation errors that can lead to dangerous consequences.

In response to threats from spoofed signals, various techniques have been developed to detect whether a received signal is a spoofed signal. In response, providers of spoofed signals have created systems that can evade detection by specific detection techniques. However, it is difficult to transmit a spoofed signal that can avoid detection by multiple detection techniques. Accordingly, the systems and methods described herein employ multiple spoofing sub-monitors for spoofing detection to generate multiple spoofing determinations based on different detection techniques. Then, a system combines the determinations from the different sub-monitors to provide an integrated spoofing determination. Because the integrated spoofing determinations are produced from measurements from different sub-monitors, the integrated spoofing determination is more resilient against spoofing techniques that can evade specific detection techniques. Thus, the integration of multiple detection techniques is more capable of determining whether a signal is a spoofed signal.

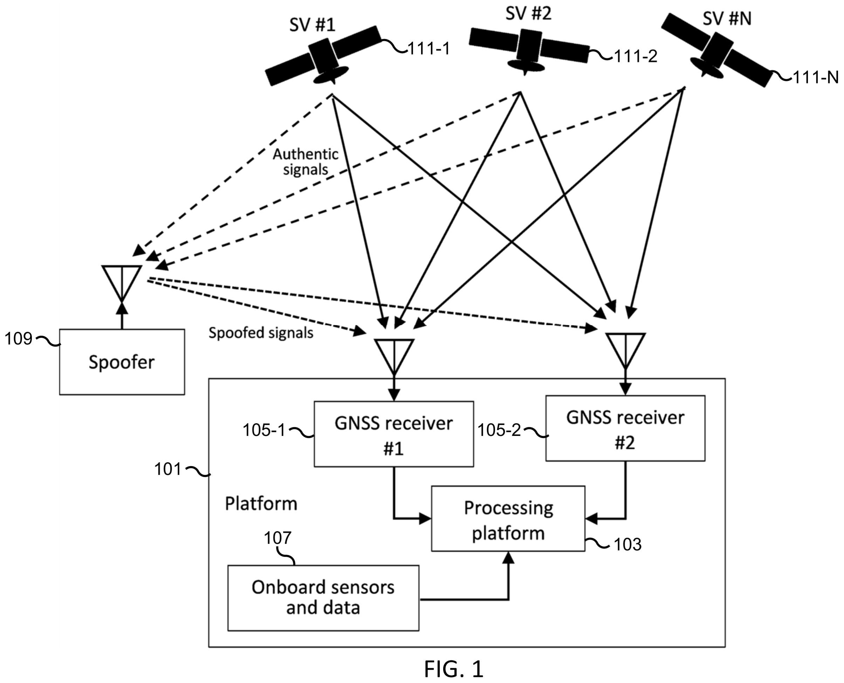

FIG. 1 is a block diagram of a platform 101 containing a system for receiving spoofed GNSS signals in addition to authentic GNSS signals. As illustrated, the platform 101 may be any platform that uses GNSS measurements to perform any of multiple GNSS-dependent tasks, like position determination and navigation. To receive GNSS signals from GNSS satellites 111, the platform 101 may include multiple GNSS receivers 105-1 and 105-2. While only two GNSS receivers are shown, the platform 101 may include more than two GNSS receivers. Further, the GNSS receivers 105-1 and 105-2 may be referred to generally or collectively as GNSS receiver(s) 105. The GNSS receivers 105 provide GNSS measurements to a processing platform 103. The processing platform 103 processes the GNSS measurements and calculates position information for the platform 101.

As described herein, the platform 101 may be any object that is reliant on GNSS signals to identify information about the platform 101, such as position, altitude, heading, and other navigational parameters. The platform 101 may be a mobile device, a land-based vehicle, a water-based vehicle, an aircraft, a spacecraft, and the like. In addition to identifying navigation information from GNSS signals, the platform 101 may also receive measurements from additional sensors 107. The additional sensors 107 may be any additional device that can provide navigation information or information that the processing platform 103 can use to determine navigation information or other environmental factors related to the platform 101. For example, the additional sensors 107 may include gyroscopes, accelerometers, barometers, altimeters, velocimeters, and the like. The information provided by the additional sensors 107 may include pressure, air speed, magnetic field strength, inertial measurements, vision information, and the like.

In certain embodiments, the GNSS receivers 105 may receive GNSS signals from one or more satellites 111-1 - 111-N (or space vehicles 1-N) in a constellation of GNSS satellites. The satellites 111-1 - 111-N may be referred to collectively or generally as satellite(s) 111. The satellites 111 may belong to different constellations provided as part of various satellite navigation systems that governmental agencies typically manage. These satellite navigation systems may include the Global Positioning System (GPS), Galileo, BeiDou, Globalnaya Navigatsionnaya Sputnikovaya Sistema (GLONASS), or equivalent global or regional-based satellite system. From the signals provided by one or more of the satellites 111, the GNSS receivers 105 are configured to determine GNSS position data, including satellite ephemeris and range data. The GNSS receivers 105 may additionally provide range data (carrier phase, pseudorange, pseudorange rate), satellite ephemeris data, and other data to the processing platform 103.

However, in addition to receiving GNSS signals from the satellites 111, the GNSS receivers 105 are susceptible to receiving spoofed signals from spoofing systems such as a spoofer 109. The spoofer 109 is a device that emits GNSS-like "spoofed" signals that may be received by the GNSS receivers 105. Further, the GNSS receivers 105 may process and track the spoofed signals in combination with authentic signals from the satellites 111. The spoofer 109 may produce the spoofed signals using different types of spoofing devices and techniques to perpetrate spoofing tasks. For example, a spoofer 109 may receive authentic GNSS signals from the satellites 111 and then rebroadcast the GNSS signals from a different location, causing the GNSS receivers 105 to receive the spoofed signals at different times. Alternatively, a spoofer 109 may create GNSS-like synthetic signals with varying levels of sophistication that are intended to misdirect the other spoofing techniques. As one or more spoofers 109 may use one of multiple techniques when transmitting spoofed signals, a single spoofing detection mechanism may be insufficient for detecting one or more spoofed signals.

In some implementations, spoofed signals may be detected using the determination of the angle of arrival, such as the pointing angle between the antennas and the actual transmitter that transmits the satellite information signals. While determining the angle of arrival may provide robust detection, determining the angle of arrival may require a phase measurement for each GNSS signal received by each antenna connected to a respective GNSS receiver 105. Such phase measurements are often not available in standard aerospace GNSS receivers.

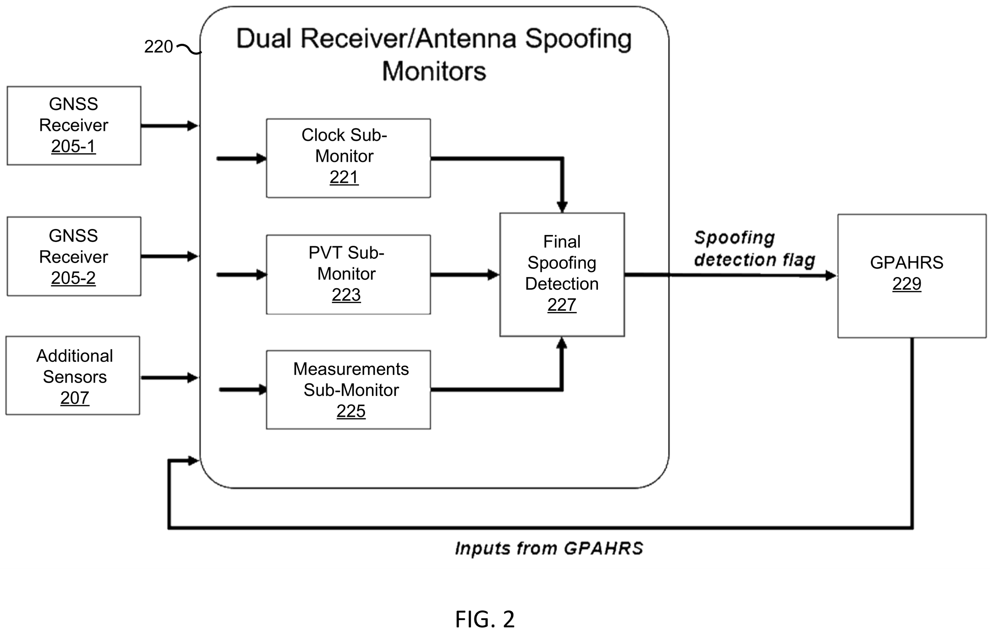

FIG. 2 is a block diagram of an integrated spoofing detection system 220 for robustly detecting GNSS spoofing. For example, FIG. 2 illustrates a system 220 for a dual receiver/antenna spoofing monitor. As shown, the system 220 may include circuitry, defined generally as an electrically implemented system, where the circuitry is configured to implement several spoofing sub-monitors. As used herein, a spoofing sub-monitor is a sub-system that is configured to receive measurements from at least one of GNSS receivers 205-1 and 205-2 (which function similarly to GNSS receivers 105) and additional sensors 207, which are shown as providing air data measurements. However, other data measurements may be provided as described above with respect to the additional sensors 107. The sub-monitors are then configured to generate spoofing determinations based on the received measurements. For example, the system 220 may include three separate sub-monitors: a clock sub-monitor 221, a PVT sub-monitor 223, and a measurements sub-monitor 225. The system 220 may include additional sub-monitors that are not illustrated.

In certain embodiments, the clock sub-monitor 221 may provide a determination of spoofing based on received clock data. Also, the PVT sub-monitor 223 may provide a determination of spoofing based on measurements of position, velocity, and time information acquired from the GNSS receivers 205 and the additional sensors 207. Further, the measurements sub-monitor 225 may provide a determination of spoofing based on general measurements from one of the additional sensors 207 and the GNSS receivers 205. When at least one of the clock sub-monitor 221, the PVT sub-monitor 223, the measurements sub-monitor 225, or other included sub-monitors generates spoofing determinations, the spoofing determinations from the sub-monitors are used to generate a final spoofing detection 227.

In further embodiments, the final spoofing detection 227 receives the spoofing determinations from the various sub-monitors within the system 220. Then the final spoofing detection 227 employs a combination logic to combine the separate spoofing determinations to generate a final spoofing determination. The system 220 then provides the final spoofing determination as an indication to an external system that one or more GNSS signals are spoofed. For example, the system 220 may provide the final spoofing determination as a flag indicating that GNSS signals are affected by a spoofer. In other implementations, the final spoofing determination may also identify which signals are affected by the spoofer, exclude the spoofed signal, attenuate the spoofed signal, and the like.

In some embodiments, the system 220 may provide the final spoofing determination as a flag to a global positioning system (GPS) aided attitude and heading reference system (GPAHRS) 229. The GPAHRS 229 may receive the spoofing determination from the system 220. The GPAHRS 229 then fuses attitude and position measurements from other measurement sources with the GNSS measurements based on the spoofing determination from the final spoofing detection 227. The GPAHRS 229 may provide the output from the GPAHRS 229 as an input to the system 220. Where the system 220 may use inputs from the GPAHRS 229 as inputs for one or more of the sub-monitors within the system 220.

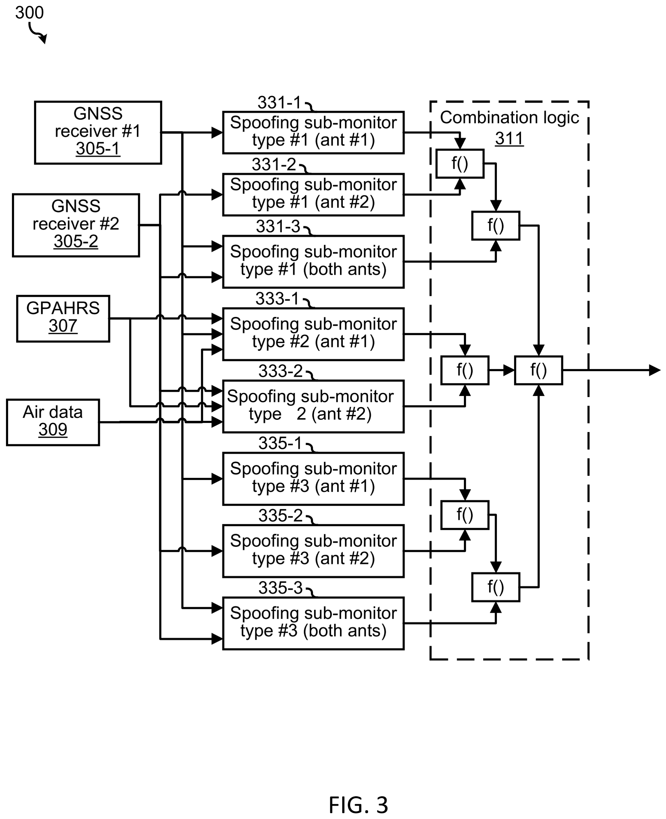

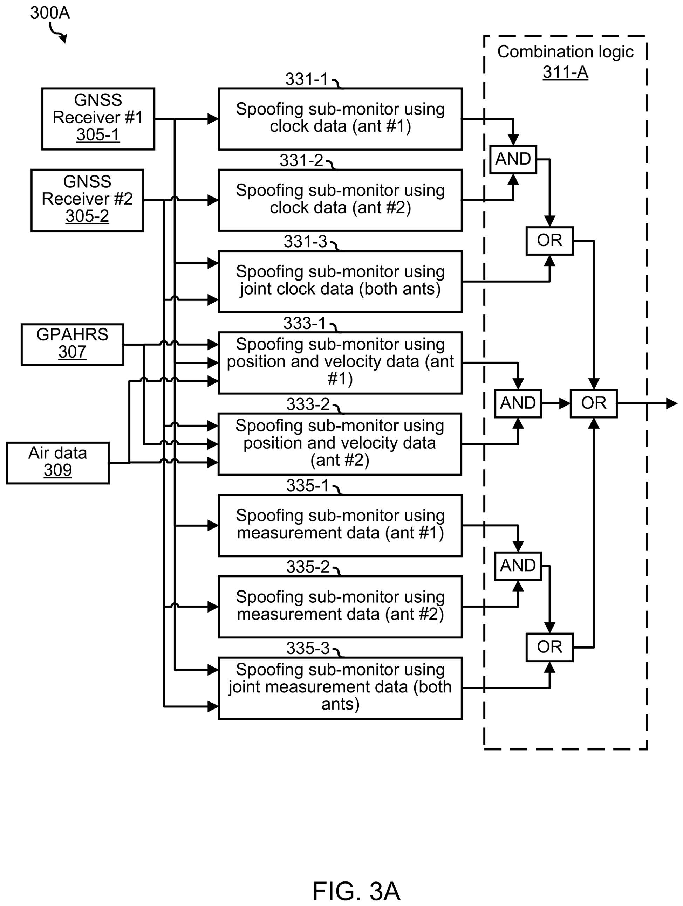

FIGs. 3 and 3A are block diagrams illustrating a system for detecting GNSS spoofing with inputs from multiple sub-monitors. FIG. 3 illustrates a general implementation of a method 300 for robust spoofing detection that receives information from multiple sources to perform spoofing monitors with multiple sub-monitors. As discussed above, the sub-monitors (such as sub-monitors 221, 223, and 225) may receive measurements from GNSS receivers 305-1 and 305-2 (which function similarly to GNSS receivers 105), GPAHRS 307 (which functions similarly to the GPAHRS 229), and air data 309 (which functions similarly to the additional sensors 207). As shown, the measurements are provided to three different sub-monitor types to cover multiple effects caused by different types of spoofing attacks (e.g., position change, time change, etc.). For example, spoofing is reported if any type of sub-monitor (e.g., using clock data, or using position data, etc.) reports spoofing. At the same time, outputs from sub-monitors from multiple GNSS receivers/antennas might be combined to filter out outliers and limit false alarms. Additional examples of additional sub-monitors may monitor the consistency of satellite data, utilization of IRS/IMU, monitor state error estimations, and the like.

Concerning the method 300, both onboard GNSS receivers 305 function in similar manners. For example, antennas associated with the GNSS receivers 305 may be placed close or proximate to each other with the same orientation. Thus, the positioning and orientation of the antennas increase the probability that the antennas will receive signals in a similar manner. When antennas receive GNSS signals in the same manner, spoofing attacks are likely to have similar impacts on both GNSS receivers 305.

In certain embodiments, the signals from the GNSS receivers 305, GPAHRS 307, and air data 309 are provided to different combinations of a first sub-monitor 331, a second sub-monitor 333, and a third sub-monitor 335. For example, the first sub-monitor 331 may be configured to receive the inputs from a set of measurement sources and provide them as outputs to a combination logic 311. For example, the first sub-monitor 331 may include a first sub-monitor part 331-1 that receives measurements from the first GNSS receiver 305-1 and provides a spoofing determination based on the received measurements from the first GNSS receiver 305-1 to the combination logic 311. Additionally, the first sub-monitor 331 may include a first sub-monitor part 331-2 that receives measurements from the second GNSS receiver 305-2 and provides a spoofing determination based on the received measurements from the second GNSS receiver 305-2 to the combination logic 311. Moreover, the first sub-monitor 331 may include a first sub-monitor part 331-3 that receives measurements from a combination of both GNSS receivers 305 and provides a joint spoofing determination based on the received measurements from both GNSS receivers 305 to the combination logic 311.

In further embodiments, the second sub-monitor 333 may be configured to receive the inputs from a set of the measurement sources and provide them as outputs to the combination logic 311. For example, the second sub-monitor 333 may include a second sub-monitor part 333-1 that receives measurements from the first GNSS receiver 305-1, the GPAHRS 307, and the air data 309. The second sub-monitor 333 provides a spoofing determination based on the received measurements to the combination logic 311. Additionally, the second sub-monitor 333 may include a second sub-monitor part 333-2 that receives measurements from the second GNSS receiver 305-2, the GPAHRS 307, and the air data 309 and provides a spoofing determination based on the received measurements to the combination logic 311.

In additional embodiments, the third sub-monitor 335 may be configured to receive the inputs from the measurement sources and provide them as outputs to a combination logic 311. For example, the third sub-monitor 335 may include a third sub-monitor part 335-1 that receives measurements from the first GNSS receiver 305-1 and provides a spoofing determination based on the received measurements from the first GNSS receiver 305-1 to the combination logic 311. Additionally, the third sub-monitor 335 may include a third sub-monitor part 335-2 that receives measurements from the second GNSS receiver 305-2 and provides a spoofing determination based on the received measurements from the second GNSS receiver 305-2 to the combination logic 311. Moreover, the third sub-monitor 335 may include a third sub-monitor part 335-3 that receives measurements from a combination of both GNSS receivers 305 and provides a joint spoofing determination based on the received measurements from both GNSS receivers 305 to the combination logic 311.

In certain embodiments, the combination logic 311 uses various combinatorial functions to combine the spoofing determinations from the first sub-monitor 331, the second sub-monitor 333, and the third sub-monitor 335 to provide an integrated spoofing determination. For example, the combinatorial functions within the combination logic 311 may combine the outputs associated with the first sub-monitor 331 from the separate antennas together and then combine the combination with the output from the first sub-monitor part 331-3. Additionally, the combinatorial functions within the combination logic 311 may combine the outputs associated with the third sub-monitor 335 from the separate antennas together and then combine the combination with the output from the third sub-monitor part 335-3. Also, the combinatorial functions within the combination logic 311 may combine the outputs from the second sub-monitor 333. Then, the combination logic 311 employs combination logic to combine the separate combined outputs from each of the sub-monitors to provide a final spoofing detection 227.

FIG. 3A illustrates a method 300A for robust spoofing detection that receives information from multiple sources to perform spoofing monitors with multiple sub-monitors. The method 300A is similar to the method 300 but illustrates a specific embodiment of combination logic 311-A. In particular, the different spoofing monitors 331, 333, and 335 receive measurements from various sources and provide spoofing determinations to the combination logic 311-A as described above in connection with FIG. 3. Concerning the first sub-monitor 331, the combination logic 311-A uses an AND (logical function) to combine the output from the first sub-monitor part 331-1 with the output from the first sub-monitor part 331-2 to include a combined antenna output for the first sub-monitor. The combination logic 311-A then uses an OR (logical function) to combine the combined antenna output with the output from the first sub-monitor part 331-3 to create a first sub-monitor spoofing determination.

In certain embodiments, with the third sub-monitor 335, the combination logic 311-A uses an AND to combine the output from the third sub-monitor part 335-1 with the output from the third sub-monitor part 335-2 to include a combined antenna output for the third sub-monitor. The combination logic 311-A then uses an OR to combine the combined antenna output with the output from the third sub-monitor part 335-3 to create a third sub-monitor spoofing determination. Additionally, the combination logic 311-A uses an AND to combine the output from the second sub-monitor part 333-1 with the output from the second sub-monitor part 333-2 to create a second sub-monitor spoofing determination. The combination logic 311-A then performs an OR to combine the first sub-monitor output, the second sub-monitor output, and the third sub-monitor output to generate an integrated spoofing determination like the final spoofing detection 227.

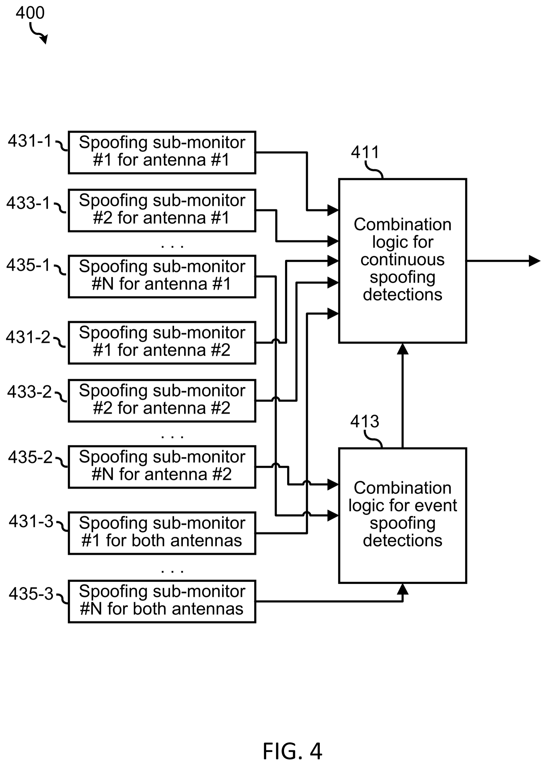

FIG. 4 is a block diagram illustrating a system 400 for detecting GNSS spoofing with inputs from multiple sub-monitors. The system 400 is an example where the different sub-monitors 431, 433, and 435 (which function similarly to the sub-monitors 331, 333, and 335) are divided into multiple groups based on properties of the sub-monitors 431, 433, and 435. For example, as shown in Figure 4, a first group of sub-monitors may generate event-driven spoofing detections (i.e., sub-monitors detecting the start and/or end of spoofing). In particular, the third sub-monitor 435 may provide event-driven spoofing detections. Further, a second group of sub-monitors may provide continuous spoofing detections (i.e., sub-monitors that can monitor received measurements and signals and distinguish between normal signals or operation and spoofing). In particular, the first sub-monitor 431 and the second sub-monitor 433 may provide continuous spoofing detections. The system 400 may include separate combination logics for the event-based spoofing detections 413 and the continuous spoofing detections 411. For example, the event-based combination logic 413 may combine the outputs for event-driven sub-monitors and provide the combined output as an input to the continuous combination logic 411. The continuous combination logic 411 then combines the output from the event-based combination logic 413 with the outputs from the continuous sub-monitors to create a final spoofing detection 227.

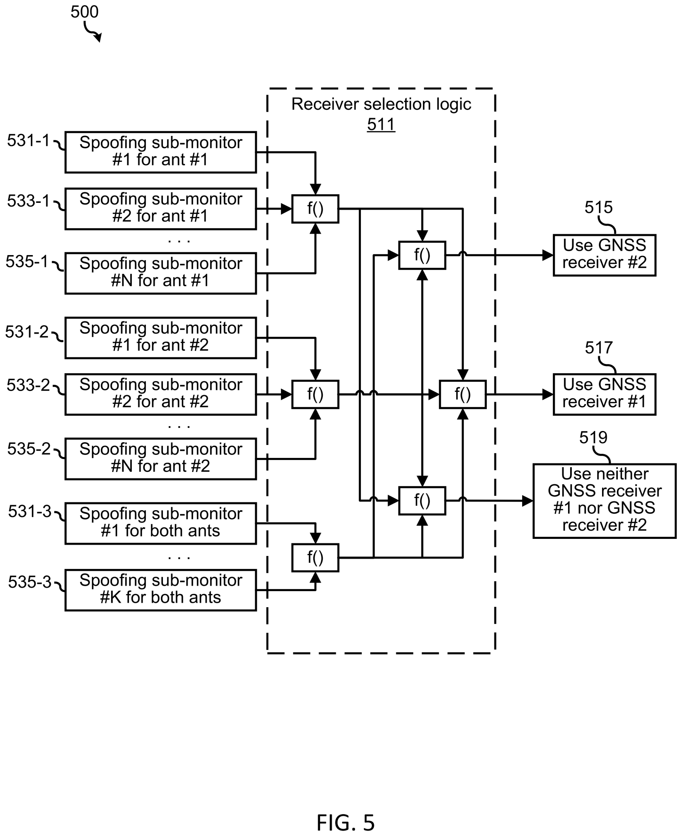

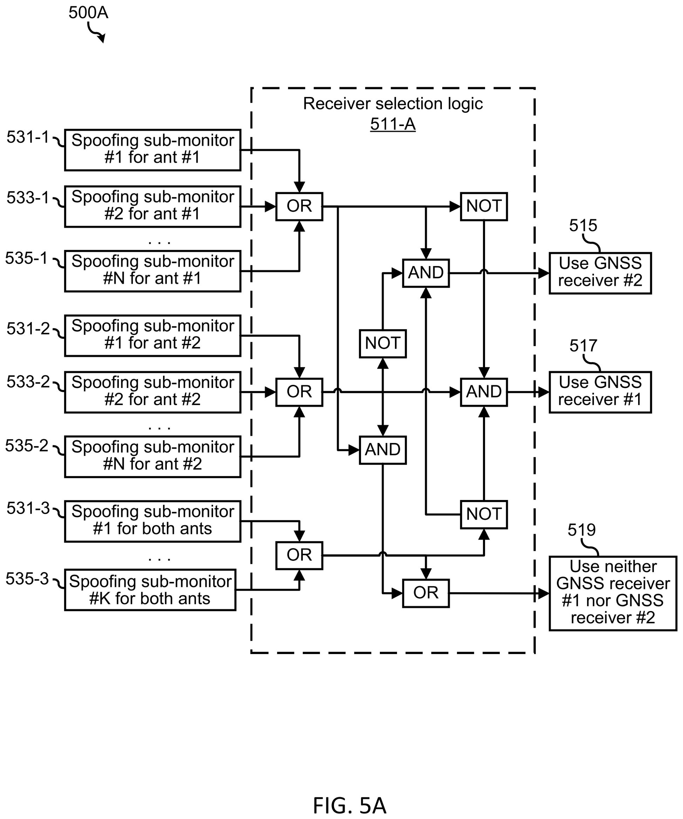

FIGs. 5 and 5A are block diagrams illustrating a system 500 for detecting GNSS spoofing with inputs from multiple sub-monitors where GNSS receivers and/or associated antennas are configured, located, or oriented in such a way that the GNSS receivers/antennas are impacted differently by GNSS and spoofed signals. For example, FIG. 5 illustrates a method for combining outputs from different sub-monitors 531, 533, and 535 that operate similarly to the different sub-monitors 331, 333, and 335. The separate sub-monitors 531, 533, and 535 may help the system 500 identify a primary GNSS receiver that is not being subject to or is resistant to a spoofing attack.

In certain embodiments, the system 500 may employ a receiver selection logic 511 that employs combinatorial logic to combine the sub-monitor outputs for the different antennas/GNSS receivers. For example, the receiver selection logic may divide the outputs from the sub-monitors 531, 533, and 535 into groups based on the antenna associated with the GNSS signal. In particular, the receiver selection logic 511 may include combinatorial logic that combines the outputs for each sub-monitor 531-1, 533-1, and 535-1 associated with a first antenna to create a first antenna combined output. Further, the receiver selection logic 511 may include combinatorial logic that combines the outputs for each sub-monitor 531-2, 533-2, and 535-2 associated with a second antenna to create a second antenna combined output. Additionally, the receiver selection logic 511 may include combinatorial logic that combines the outputs for sub-monitors 531-3 and 535-3 associated with both antennas to create a combined antenna output.

In some embodiments, the receiver selection logic 511 may employ additional combinatorial logic to combine the first antenna combined output, the second antenna combined output, and the combined antenna output to produce various outputs that indicate whether the first antenna, the second antenna, or both antennas are affected by spoofing. For example, the receiver selection logic 511 may combine the first antenna combined output, the second antenna combined output, and the combined antenna output to generate a use second antenna indication 515, a use first antenna indication 517, or a reject both antennas indication 519.

FIG. 5A illustrates a method 500A for robust spoofing detection that receives information from multiple sources to perform spoofing monitors with multiple sub-monitors. The method 500A is similar to the method 500 but illustrates a specific embodiment of combination logic 511-A. In particular, the receiver selection logic 511-A may employ an OR (logical function) to combine the outputs for each sub-monitor 531-1, 533-1, and 535-1 associated with a first antenna to create the first antenna combined output. Further, the receiver selection logic 511-A may employ an OR to combine the outputs for each sub-monitor 531-2, 533-2, and 535-2 associated with a second antenna to create a second antenna combined output. Additionally, the receiver selection logic 511-A may employ an OR to combine the outputs for sub-monitors 531-3 and 535-3 associated with both antennas to create a combined antenna output.

In certain embodiments, the combination logic 511-A may employ various logic to generate the use second antenna indication 515, the use first antenna indication 517, and the reject both antennas indication 519. In some embodiments, the combination logic 511-A may generate the use second antenna indication 515 by performing an AND (logical function) of the first antenna combined output, with NOTs (logical function) of the second antenna combined output and the combined antenna output. Further, the combination logic 511-A may generate the use first antenna indication 517 by performing an AND of the second antenna combined output with NOTs of the first antenna combined output and the combined antenna output. Moreover, the combination logic 511-A may generate the reject both antennas indication 519 by performing an OR of the combined antenna output with an AND of the first antenna combined output and the second antenna combined output.

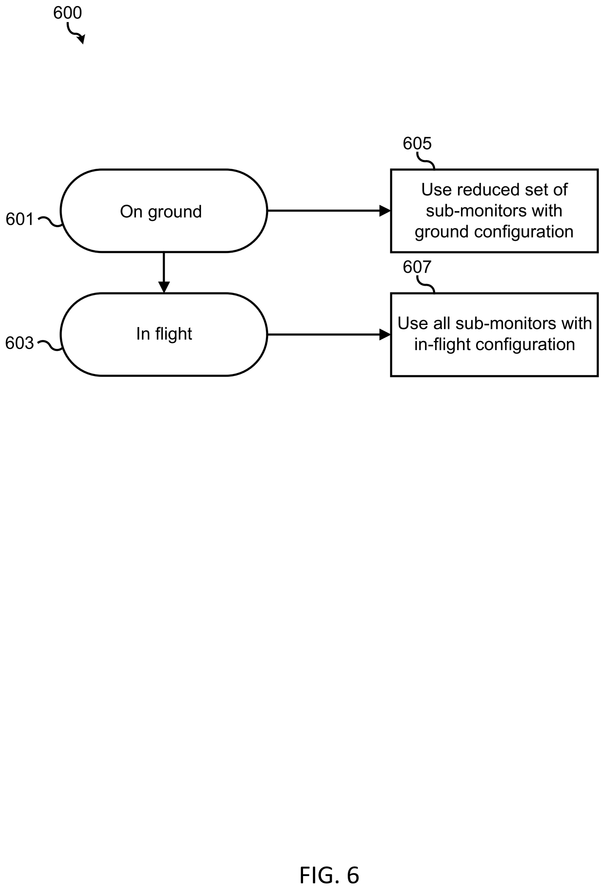

FIG. 6 is a flowchart diagram of a method 600 illustrating the detection of spoofing at different operational stages for a vehicle, where the vehicle is an aircraft. In particular, the sets of sub-monitors used for a final spoofing detection 227 may change based on different operational aspects like flight phase. For example, the method 600 proceeds at 601, where it is determined whether the vehicle is located on the ground. If the vehicle is on the ground, the method proceeds at 605, where a system uses a reduced set of sub-monitors with ground specific configuration and parameters. For example, the reduced set of sub-monitors might exclude sub-monitor searching for sudden velocity drops. Moreover, parameters like detection thresholds might consider vehicle dynamics when being on the ground. Further, when the method 600 proceeds at 603, it is determined whether the vehicle is in flight. If the vehicle is in flight, the method proceeds at 607, where a system uses all available sub-monitors with in-flight specific configuration and parameters.

The methods described herein for combining data from multiple GNSS receivers and multiple separate sub-monitors and other sensors proposed within this invention disclosure might be implemented in software only. It might be hosted on any processing platform connected to one or more GNSS receivers. For example, it might be implemented into AH-2000, LASEREF VI, etc.

Further, A computer or processor used in the present method and system can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer-readable instructions for carrying out various process tasks, calculations, and control functions used in the present method and system.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer-readable medium used for storing computer-readable instructions or data structures. Such a computer-readable medium can be any available medium that can be accessed by a general-purpose or special-purpose computer or processor, or any programmable logic device.

Suitable processor-readable media may include storage or memory media such as magnetic or optical media. For example, storage or memory media may include conventional hard disks, compact disks, DVDs, Blu-ray discs, or other optical storage disks; volatile or non-volatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

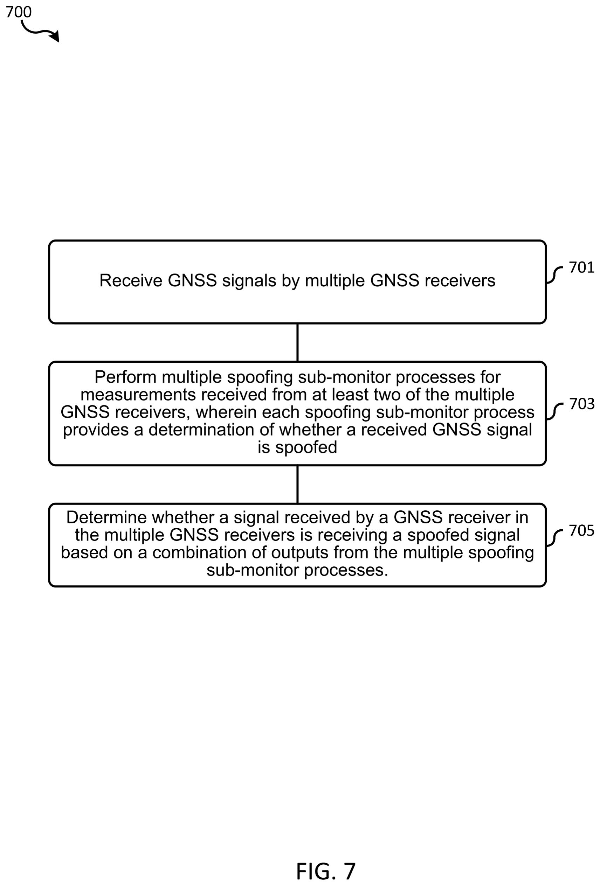

FIG. 7 is a flowchart diagram illustrating a method 700 for providing a spoofing determination by combining multiple spoofing determinations from multiple spoofing sub-monitor processes. The method 700 proceeds at 701, where GNSS signals are received by multiple GNSS receivers. Further, the method 700 proceeds at 703, where multiple spoofing sub-monitor processes are performed for measurements received from at least two of the multiple GNSS receivers, wherein each spoofing sub-monitor process provides a determination of whether a received GNSS signal is spoofed. Moreover, the method 700 proceeds at 705, where it is determined whether a signal received in the multiple GNSS receivers is receiving a spoofed signal based on a combination of outputs from the multiple spoofing sub-monitor processes.

### Example Embodiments

Example 1 includes a system comprising: multiple global navigation satellite system (GNSS) receivers; and circuitry configured to receive GNSS data from the multiple GNSS receivers, wherein the circuitry is configured to: perform multiple spoofing sub-monitor processes for at least two GNSS receivers in the multiple GNSS receivers using information received from the multiple GNSS receivers; and determine whether a GNSS receiver in the multiple GNSS receivers is receiving a spoofed GNSS signal based on a combination of outputs from the multiple spoofing sub-monitor processes.

Example 2 includes the system of Example 1, wherein the multiple spoofing sub-monitor processes further comprise at least one spoofing sub-monitor process for at least one additional sensor.

Example 3 includes the system of any of Examples 1-2, wherein the combination of the outputs is based on a combination logic executed by the circuitry.

Example 4 includes the system of Example 3, wherein the combination logic is configured to receive spoofing determinations from a spoofing sub-monitor process in the multiple spoofing sub-monitor processes for a first GNSS receiver and a second GNSS receiver in the multiple GNSS receivers, wherein the combination logic receives a first spoofing determination associated with the first GNSS receiver and a second spoofing determination associated with the second GNSS receiver, wherein the combination logic determines that a signal received by the first GNSS receiver and the second GNSS receiver is spoofed when both the first spoofing determination and the second spoofing determination indicate that the signal is spoofed.

Example 5 includes the system of Example 4, wherein the combination logic is further configured to determine that the signal is spoofed when at least one of: the first spoofing determination and the second spoofing determination indicate that the signal is spoofed; and a joint spoofing determination associated with both the first GNSS receiver and the second GNSS receiver indicates that the signal is spoofed.

Example 6 includes the system of any of Examples 4-5, wherein at least one of the first spoofing determination and the second spoofing determination is based on data acquired from at least one additional sensor.

Example 7 includes the system of any of Examples 3-6, wherein the combination logic comprises: a continuous combination logic configured to combine spoofing determinations from one or more continuous spoofing sub-monitor processes in the multiple spoofing sub-monitor processes, wherein the one or more continuous spoofing sub-monitor processes provide continuous detection; and an event-based combination logic configured to combine event-based spoofing determinations from one or more event-based spoofing sub-monitor processes in the multiple spoofing sub-monitor processes, wherein the one or more event-based spoofing sub-monitor processes provide event-based detection.

Example 8 includes the system of Example 7, wherein the continuous combination logic is further configured to combine the spoofing determinations from the one or more continuous spoofing sub-monitor processes with the event-based spoofing determinations from the event-based combination logic.

Example 9 includes the system of any of Examples 1-8, further comprising determining whether to use GNSS signals received from one or more of the multiple GNSS receivers based on a selection combination of the outputs.

Example 10 includes the system of Example 9, wherein the selection combination of the outputs is based on a selection logic executed by the circuitry.

Example 11 includes the system of any of Examples 1-10, wherein the multiple GNSS receivers are located proximate to one another and are configured to receive signals from a similar direction.

Example 12 includes a method comprising: receiving GNSS signals by multiple GNSS receivers; performing multiple spoofing sub-monitor processes for measurements received from at least two of the multiple GNSS receivers, wherein each spoofing sub-monitor process provides a determination of whether a received GNSS signal is spoofed; and determining whether a signal received by a GNSS receiver in the multiple GNSS receivers is receiving a spoofed signal based on a combination of outputs from the multiple spoofing sub-monitor processes.

Example 13 includes the method of Example 12, wherein the multiple spoofing sub-monitor processes further comprise at least one spoofing sub-monitor process for at least one additional sensor.

Example 14 includes the method of any of Examples 12-13, wherein determining whether the signal received by at least one GNSS receiver in the multiple GNSS receivers is spoofed based on the combination of the outputs further comprises executing a combination logic.

Example 15 includes the method of Example 14, wherein executing the combination logic comprises: receiving spoofing determinations from a spoofing sub-monitor process in the multiple spoofing sub-monitor processes for a first GNSS receiver and a second GNSS receiver in the multiple GNSS receivers, wherein the combination logic receives a first spoofing determination associated with the first GNSS receiver and a second spoofing determination associated with the second GNSS receiver; and determining that signals received by the first GNSS receiver and the second GNSS receiver are spoofed when both the first spoofing determination and the second spoofing determination indicate that the signal is spoofed.

Example 16 includes the method of Example 15, wherein executing the combination logic further comprises determining that the signal is spoofed when at least one of: the first spoofing determination and the second spoofing determination indicate that the signal is spoofed; and a joint spoofing determination associated with both the first GNSS receiver and the second GNSS receiver indicates that the signal is spoofed.

Example 17 includes the method of any of Examples 15-16, wherein at least one of the first spoofing determination and the second spoofing determination is based on data acquired from at least one additional sensor.

Example 18 includes the method of any of Examples 14-17, wherein executing the combination logic comprises: executing a continuous combination logic configured to combine the spoofing determinations from one or more continuous spoofing sub-monitor processes in the multiple spoofing sub-monitor processes, wherein the one or more continuous spoofing sub-monitor processes provide continuous detection; and executing an event-based combination logic configured to combine the spoofing determinations from one or more event-based spoofing sub-monitor processes in the multiple spoofing sub-monitor processes, wherein the one or more event-based spoofing sub-monitor processes provide event-based detection; wherein the continuous combination logic is further configured to combine the spoofing determinations from the one or more continuous spoofing sub-monitor processes with an event-based spoofing determination from the event-based combination logic.

Example 19 includes the method of any of Examples 12-18, further comprising executing a selection logic to determine whether to use the GNSS signals received from one or more of the multiple GNSS receivers.

Example 20 includes a system comprising: multiple global navigation satellite system (GNSS) receivers; one or more additional sensors configured to provide navigation measurements; and circuitry configured to receive GNSS data from the multiple GNSS receivers and the navigation measurements, wherein the circuitry is configured to: perform multiple spoofing sub-monitor processes for at least two GNSS receivers in the multiple GNSS receivers using information received from the multiple GNSS receivers and the navigation measurements; and determine whether a GNSS receiver in the multiple GNSS receivers is receiving a spoofed GNSS signal based on a combination of outputs from the multiple spoofing sub-monitor processes based on a combination logic executed by the circuitry; wherein the multiple spoofing sub-monitor processes further comprise at least one spoofing sub-monitor process for e or more additional sensors.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system comprising:
multiple global navigation satellite system, GNSS, receivers (105-1, 105-2); and
circuitry (103) configured to receive GNSS data from the multiple GNSS receivers (105-1, 105-2), wherein the circuitry (103) is configured to:
perform multiple spoofing sub-monitor processes for at least two GNSS receivers in the multiple GNSS receivers (105-1, 105-2) using information received from the multiple GNSS receivers (105-1, 105-2); and
determine whether a GNSS receiver in the multiple GNSS receivers (105-1, 105-2) is receiving a spoofed GNSS signal based on a combination of outputs from the multiple spoofing sub-monitor processes.

2. The system of claim 1, wherein the multiple spoofing sub-monitor processes further comprise at least one spoofing sub-monitor process for at least one additional sensor (107).

3. The system of claim 1, wherein the combination of the outputs is based on a combination logic executed by the circuitry.

4. The system of claim 3, wherein the combination logic is configured to receive spoofing determinations from a spoofing sub-monitor process in the multiple spoofing sub-monitor processes for a first GNSS receiver (105-1) and a second GNSS receiver (105-2) in the multiple GNSS receivers (105-1, 105-2),
wherein the combination logic (311) receives a first spoofing determination associated with the first GNSS receiver and a second spoofing determination associated with the second GNSS receiver,
wherein the combination logic (311) determines that a signal received by the first GNSS receiver and the second GNSS receiver is spoofed when both the first spoofing determination and the second spoofing determination indicate that the signal is spoofed.

5. The system of claim 4, wherein the combination logic (311) is further configured to determine that the signal is spoofed when at least one of:
the first spoofing determination and the second spoofing determination indicate that the signal is spoofed; and
a joint spoofing determination associated with both the first GNSS receiver and the second GNSS receiver indicates that the signal is spoofed.

6. The system of claim 4, wherein at least one of the first spoofing determination and the second spoofing determination is based on data acquired from at least one additional sensor.

7. The system of claim 3, wherein the combination logic comprises:
a continuous combination logic (411) configured to combine spoofing determinations from one or more continuous spoofing sub-monitor processes in the multiple spoofing sub-monitor processes, wherein the one or more continuous spoofing sub-monitor processes provide continuous detection; and
an event-based combination logic (413) configured to combine event-based spoofing determinations from one or more event-based spoofing sub-monitor processes in the multiple spoofing sub-monitor processes, wherein the one or more event-based spoofing sub-monitor processes provide event-based detection, wherein the continuous combination logic (411) is further configured to combine the spoofing determinations from the one or more continuous spoofing sub-monitor processes with the event-based spoofing determinations from the event-based combination logic (413).

8. The system of claim 1, further comprising determining whether to use GNSS signals received from one or more of the multiple GNSS receivers (105-1, 105-2) based on a selection combination of the outputs, wherein the selection combination of the outputs is based on a selection logic executed by the circuitry.

9. The system of claim 1, wherein the multiple GNSS receivers (105-1, 105-2) are located proximate to one another and are configured to receive signals from a similar direction.

10. A method comprising:
receiving GNSS signals by multiple GNSS receivers (105-1, 105-2);
performing multiple spoofing sub-monitor processes for measurements received from at least two of the multiple GNSS receivers (105-1, 105-2), wherein each spoofing sub-monitor process provides a determination of whether a received GNSS signal is spoofed; and
determining whether a signal received by a GNSS receiver in the multiple GNSS receivers (105-1, 105-2) is receiving a spoofed signal based on a combination of outputs from the multiple spoofing sub-monitor processes.
